Europäisches Patentamt

European Patent Office

Office européen des brevets

(19)

|||||||||||||||||||||||||||||||||||||||||||||||||

(11) Veröffentlichungsnummer : **0 350 614 B1**

(12) # EUROPÄISCHE PATENTSCHRIFT

(45) Veröffentlichungstag der Patentschrift :
**20.05.92 Patentblatt 92/21**

(51) Int. Cl.⁵ : **F17D 5/00**

(21) Anmeldenummer : **89110063.8**

(22) Anmeldetag : **03.06.89**

(54) **Verfahren zur Prüfung von Rohrleitungssystemen.**

(30) Priorität : **15.07.88 DE 3824003**

(43) Veröffentlichungstag der Anmeldung :
**17.01.90 Patentblatt 90/03**

(45) Bekanntmachung des Hinweises auf die
Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**EP-A- 0 047 032**
**EP-A- 0 072 105**
**DE-A- 3 433 860**
**GB-A- 1 552 702**

(56) Entgegenhaltungen :
**VGB Kraftwerkstechnik 66 (1986), Heft 10, Seiten 983 bis 999, P. Koschel et al.: "Konzept zur Lebensdauerüberwachung undErtüchtigung von Kraftwerksrohrleitungen im Zeitstandbereich"**

(73) Patentinhaber : **NSQ- HAUK GESELLSCHAFT FUER QUALITAETSSICHERUNG MBH**
**Hoheloogstrasse 16**
**W-6700 Ludwigshafen (DE)**

(72) Erfinder : **Hauk, Thom**
**Auf der Oberplatte 1**
**W-6701 Altrip (DE)**

(74) Vertreter : **Meyer-Roedern, Giso, Dr.**
**Bergheimer Strasse 10-12**
**W-6900 Heidelberg 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Prüfung von Rohrleitungssystemen, bei dem man den Aufbau des Rohrleitungssystems überprüft und gegebenenfalls neu aufnimmt, die Ist-Wandstärke des Rohrleitungssystems über ein zerstörungsfreies Prüfverfahren bestimmt und eine Iststand-Isometrie des Rohrleitungssystems bestätigt bzw. neu erstellt, bei dem man eine Lebensdauerberechnung einschließlich der Berechnung einer die Betriebssicherheit gewährleitenden Mindestwandstärke durchführt, in die die Spannung eingeht, denen das Rohrleitungssystem bei auslegungs- und betriebsspezifischen Lastfällen und/oder Lastfallkombinationen unterliegt, bei dem man die Ist-Wandstärke mit der berechneten Mindestwandstärke vergleicht, und bei dem man ausgehend von dem dokumentierten Neuzustand des Rohrleitungssystems oder einer früheren Bestandsaufnahme die Entwicklung der Korrosion und/oder Erosion des Rohrleitungssystems feststellt und durch Extrapolation eine Prognose für die weitere Lebensdauer der Rohrleitungssystemkomponenten gewinnt.

Ein solches Verfahren ist der Zeitschrift VGB Kraftwerkstechnik 66 (1986) Heft 10, Seiten 983 bis 999 zumindest andeutungsweise zu entnehmen.

In der Zeitschrift Technology, Oil & Gas Journal (1983) Seiten 135 bis 137 ist die Ultraschallmessung der Wanddicke von Rohrleitungssystemen beschrieben. Die Meßpunkte sollen in geeigneter Weise kodiert an einer Isometrie des Rohrleitungssystems vermerkt werden. Es wird empfohlen, eine Pensionsalterdicke des Rohrleitungssystems zu berechnen und in der Dokumentation zu vermerken.

Der Einsatz von Finite-Element-Methoden ist bei der Auslegung, Konstruktion und Berechnung von Rohrleitungssystemen bekannt.

Aufgabe der Erfindung ist es, ein bei vertretbarem Aufwand äußerst verläßliches Verfahren zur Sicherheitsprüfung von Rohrleitungssystemen anzugeben, mit dem ein Höchstmaß an Betriebssicherheit für Anlage und Personal gewährleistet. das Ausfall risiko und die Kosten für ungeplante Anlagenstillstände minimiert, die Planbarkeit von Revisionsarbeiten bei Abstellungen hinsichtlich Kosten und terminlicher Abwicklung verbessert und dem Anlagenbetreiber eine übersichtliche, auch für die Optimierung der Anlage und die Simulation abgewandelter Betriebsbedingungen geeignete fertigungs- und produktbezogene Dokumentation an die Hand gegeben wird.

Diese Aufgabe wird bei einem Verfahren der genannten Art dadurch gelöst, daß man die Lebensdauerberechnung mit einer umfassenden Spannungsanalyse nach der Methode der finiten Elemente durchführt, daß man zur Erstellung der Isometrie Streckenkontrollpunkte beidseits von Schweißnähten an den Rohrleitungsabschnitten im Bereich von Rohrhalterungen und -auflagen, Bogen, Stutzen, Abzweigen, T-Stücken, Flanschverbindungen, Armaturen und Kompensatoren festlegt, und daß man an jedem Streckenkontrollpunkt die Ist-Wandstärke an einer Mehrzahl von gleichmäßig über den Umfang verteilten Meßpunkten erfaßt und die Mindestwandstärke an diesen Meßpunkten berechnet.

Nach dem erfindungsgemäßen Verfahren macht man zunächst eine Bestandsaufnahme hinsichtlich des Ist-Zustands des Rohrleitungssystems. Man nimmt dessen Trassierung auf, wozu man in der Regel auf die betriebliche Dokumentation zurückgreifen kann, und das Rohrleitungssystem nur in dem erforderlichen Umfang neu vermißt. Dabei legt zugleich Streckenkontrollpunkte fest, und zwar beidseits von Schweißnähten an den Rohrleitungsabschnitten im Bereich von Rohrhalterungen und -auflagen sowie an Bogen, Stutzen, Abzweigen, T-Stücken, Flanschverbindungen, Armaturen und Kompensatoren. Durch diese Festlegung der Streckenkontrollpunkte ist sichergestellt, daß sich an allen wesentlichen Rohrleitungssystemkomponenten ein Streckenkontrollpunkt befindet, aber auch nicht mehr Streckenkontrollpunkte als nötig vorhanden sind, so daß sich der Rechenaufwand in vertretbaren Grenzen hält. Man mißt dann an jedem Streckenkontrollpunkt die Ist-Wandstärke des Rohrleitungssystems. Dies geschieht vorzugsweise mit einer Ultraschallmessung an einer Mehrzahl von Meßpunkten, die gleichmäßig über den Rohrumfang verteilt sind. Es empfiehlt sich, vier um 90° versetzte Meßpunkte vorzusehen.

Auf der Grundlage des ermittelten Aufbaus und der gemessenen Ist-Wandstärken erstellt man eine Isometrie des Rohrleitungssystems, anhand derer man nach der Methode der finiten Elemente die Spannungen berechnet, denen das Rohrleitungssystem unter Betriebsbedingungen unterliegt. Üblich sind Sicherheitsberechnungen, die allein den Innendruck in einem Rohrleitungssystem berücksichtigen. Damit bleiben aber wesentliche Einflüsse außer Betracht, und man gewinnt nur ein annäherndes Bild über die Spannungen, denen das Rohrleitungssystem unterliegt, was zu einer Unterschätzung, aber auch Überschätzung der herrschenden Belastungen führen kann. Die erfindungsgemäß nach der Methode der finiten Elemente angestellte Spannungsberechnung berücksichtigt vorzugsweise als statische Belastung das Eigengewicht, den Innendruck, die behinderte Wärmedehnung, Auflagerverschiebungen, insbesondere durch Vorspannung hervorgerufenen Elementverkürzungen und gerichtete Streckenlasten, insbesondere Windlasten. Als dynamische Belastung können Erdbeben als Spektrum und insbesondere durch Druckstoßkräfte hervorgerufene zeitabhängige Knotenlasten berücksichtigt werden. Als nichtlineare statische Lasten werden vorzugsweise ein Abheben am Auflager, die Reibung am Auflager sowie durch Anschlagwirkung hervorgerufene Lasten berücksichtigt. Außerdem können an den tatsächlichen Betriebsbedingungen und dem Gefährdungspotential des Rohrleitungssystem orientierte Lastfallkombinationen in die Rechnung einbezogen werden, die insbesondere die Spannungen aus Innendruck, Spitzendruck, bleibender Belastung, gelegentlicher Belastung, Wärmedehnung und Auflagerverschiebung einbeziehen. Man gewinnt so ein realistisches Bild der Spannungen, denen das Rohrleitungssystem in dem aufgenommenen Ist-Zustand unterliegt.

Aus den wirkenden Spannungen wird eine die Betriebssicherheit gewähleistende Mindestwandstärke berechnet, und zwar für die Meßpunkte sämtlicher Streckenkontrollstellen. Mit der berechneten Mindestwandstärke wird dem Betriebsingenieur eine übersichtliche Größe an die hand gegeben, die er unmittelbar mit der gemessenen Ist-Wandstärke vergleichen kann, um daraus Folgerungen für sofortige oder zukünftige Baumaßnahmen zu ziehen. Es wird ausgehend von einem dokumentierten Neuzustand des Rohrleitungssystems oder einer früheren Bestandsaufnahme die Entwicklung der Korrosion und/oder Erosion des Rohrleitungssystems festgestellt und durch Extrapolation eine Prognose für die weitere Lebensdauer der Rohrleitungssystemkomponenten gemacht.

Die erfindungsgemäße Spannungsberechnung nach der Methode der finiten Elemente liefert auch die Eigenspannungen, denen das Rohrleitungssystem unterliegt. Damit können Verlegungsfehler eliminiert und das Halterungssystem der Rohrleitung verbessert werden. Anhand der Isometrie des Rohrleitungssystems lassen sich überdies Simulationsrechnungen durchführen, um beispielswiese die bei geänderten Betriebsbedingungen herrschenden Spannungen zu ermitteln und aussagen über die dann gegebene Betriebssicherheit zu machen. Die bei der Bestandsaufnahme erhaltene Isometrie bildet schließlich auch eine geeignete Grundlage für die Erstellung einer kompletten Montageisometrie mit Maßen und Stücklisten.

Das erfindungsgemäße Verfahren ermöglicht eine EDV-gestützte Überprüfung von konstruktions- und korrosionsbedingten Schwachstellen an Rohrleitungssystemen. Es werden folgende Zeile verfolgt:
- Minimierung des Ausfallrisikos der Gesamtanlage
- Gewährleistung der Betriebssicherheit für Anlage und Personal
- Minimierung der Kosten für ungeplante Anlagenstillstände
- Verbesserung der Planbarkeit von Revisionsarbeiten bei Abstellungen hinsichtlich Kosten und terminlicher Abwicklung
- Sicherstellung einer konsistenten, EDV-gestützten fertigungs-und produktbezogenen Dokumentation.

Wesentliche Verfahrensschritte sind:
- Verifikation des Iststandes über Wandstärkemessungen an den Rohrleitungssystemen mittels Ultraschall
- Rechnergestützte Ermittlung der erforderlichen Mindestwandstärken über ein Finite Element-Programm unter Berücksichtigung von Betriebslastfällen sowie von notwendigen Lastfallkombinationen
- Vergleich des Istzustandes mit den rechnerisch ermittelten zulässigen Werten
- Bewertung und Festlegung der zu ergreifenden Maßnahmen
- CAD-gestützte Erstellung von Montageisometrien mit Stücklisten.

Die vorhandene Wandstärke wird mittels Ultraschall gemessen, wobei pro Streckenkontrollpunkt jeweils vier Messungen am Rohrleitungsumfang durchgeführt werden. In folgenden Komponenten und Komponententeilen werden Streckenkontrollpunkte im wesentlichen beidseitig von Schweißnähten fixiert:
- Rohrleitungen im Bereich von Rohrhalterungen und -auflagen
- Stutzen
- Abzweige
- Flanschverbindungen
- Armaturen
- Kompensatoren
- Bogen
- T-Stücke

Über die durch zerstörunsfreie Materialprüfung ermittelten Wanddicken und die durch EDV-unterstützte Auswertung der Materialprüfergebnisse erfolgten Spannungsanalysen wird ein hinreichend realistisches Bild über den Spannungszustand und die zu erwartende Lebensdauer der Rohrleitungen gewonnen. Dies wird erreicht durch:
- rechnerische Ermittlung der Spannungen, die aufgrund des Wandstärken-Istzustandes vorliegen
- rechnerische Ermittlung der Wandstärke, die Betriebssicherheit gewährleistet
- Ableitung der weiteren Lebensdauer der Komponenten durch Vergleich der o. g. Parameter.

Daraus folgt, daß der Betreiber einer Anlage Revisionsarbeiten besser vorplanen und gezielt gefährdete Rohrleitungen austauschen kann.

Über die Spannungsanalysenberechnung können gleichzeitig Reaktionskräfte von halterungen und Anschlußkräfte an Behältern ermittelt werden. Weiter gibt die Spannungsanalysenberechnung die Möglichkeit, durch Optimierung des Halterungskonzeptes Spannungsspitzen zu eliminieren. Dies kann bedeuten, daß Halterungen abhängig von den örtlichen Verhältnissen ausgetauscht, geändert oder ergänzt werden müssen.

Weiterhin wird die einfache Bewertung der Betriebssicherheit bei Änderung von Betriebsparametern wie z. B. Innendruck, Temperatur u.s.w. ermöglicht.

Das verwendete Finite-Element-Programm führt linear elastische Analysen von Rohrleitungssystemen unter statischen und dynamischen Belastungen durch. Es kann in einem Rechenlauf sowohl statische, als auch dynamische Lastfälle verarbeiten und Lastfallüberlagerungen durchführen. Die Spannungsauswertung für die Lastfälle bzw. für die Lastfallüberlagerungen erfolgt nach ANSI (American Standard Institute) und ASME (American Society of Mechanical Engineers).

Als statische Belastung verarbeitet das Programm:
– Eigengewicht
– Innendruck
– behinderte Wärmedehnung
– Auflagerverschiebungen
– Elementverkürzungen (Vorspannung)
– gerichtete Steckenlasten (Wind)
Als dynamische Belastung verarbeitet das Programm:
– Erdbeben als Spektrum
– zeitabhängige Knotenlasten (Druckstoßkräfte)
Als nicht lineare statische Lasten verabreitet das Programm:
– Abheben am Auflager
– Anschlag
– Reibung am Auflager
Aus Erfahrung werden Lastfalkombinationen unter Berücksichtigung der folgenden Spannungen berechnet:
– Spannung aus Innendruck
– Spannung aus Spitzendruck
– Spannung aus bleibender Belastung
– Spannung aus gelegentlicher Belastung
– Spannung aus Wärmedehnung
– Spannung aus Auflagerverschiebung
Bei der Ermittlung der erforderlichen Mindestwandstärken werden folgende Wandbedingungen berücksichtigt:
– Längsspannungen nach Spannungsauswertung über den ASME-Code. Für diese Berechnung stehen die Ist-Stands-Isometrien, die Auslegungsdaten der Rohrleitungen und das vom TüV anerkannte Rohrberechnungsprogramm SR-PIPE zur Verfügung.
– Umfangspannungen nach DIN 2413, wobei Innendruck und Prüfdruck ausschlaggebend sind.
– Konstruktionsbedingt erforderliche Mindestwandstärken nach DIN 2463.
Bei der Festlegung von Bewertungskriterien für die Korrosionskontrolle wurde aus Sicherheitsgründen konservativ davon ausgegangen, daß der Korrosionabtrag neuinstallierter Komponenten bis zum Zeitpunkt der Erstmessung innerhalb von 5 Jahren erfolgte. Die Festlegung eines fiktiven Korrosionszeitraumes ist empfehlenswert, um den nicht unerheblichen Aufwand für das Nachvollziehen der effektiven Betriebszeit ggf. mit unterschiedlichen Betriebsparametern und Medien zu umgehen.

Als Bewertungskriterien wurden eingeführt:

Kriterium 1: Komponente einsetzbar noch mindestens 10 Jahre.

Das Komponentenmaterial ist korrosionsbeständig. Eine Bewertung über das weitere Vorgehen, z. B. ergänzende Kontrollmessungen, ggf. stichprobenartig, sollte aufgrund der Anlagenbetriebsweise in diesem Zeitraum und gemäß den dann vorliegenden Randbedingungen erfolgen.

Kriterium 2: Kontrolle an der Komponente in 5 Jahren wiederholen.

Die Mindestwandstärke kann im Zeitraum von ca. 5 bis 10 Jahren ab durchgeführter Erstmessung erreicht werden. Vor der nächsten Großabstellung ist die Korrosionskontrolle zu wiederholen.

Kriterium 3: Komponente innerhalb eines Jahres erneuern.

Die Mindestwandstärke wird in weniger als 5 Jahren ab durchgeführter Erstmessung erreicht. Die Lebensdauer der Komponente erreicht nicht mehr den Termin der nächsten Großabstellung.

Kriterium 4: Sofortmaßnahme notwendig

Zulässige Mindestwandstärke ist unterschritten.
Zur Vereinfachung der Abwicklung und Dokumentation von Umbaumaßnahmen steht ein EDV-Konzept zur Verfügung, mit dem es möglich ist, mit Hilfe eines CAD-Systems auf der Basis der vorliegenden Iststandsisometrien Montageisometrien mit Stücklisten zu erstellen.

## Patentansprüche

1. Verfahren zur Prüfung von Rohrleitungssystemen, bei dem man den Aufbau des Rohrleitungssystems überprüft und gegebenenfalls neu aufnimmt, die Ist-Wandstärke des Rohrleitungssystems über ein zerstörungsfreies Prüfverfahren bestimmt und eine Iststand-Isometrie des Rohrleitungssystems bestätigt bzw. neu erstellt, bei dem man eine Lebensdauerberechnung einschließlich der Berechnung einer die Betriebssicherheit gewährleistenden Mindestwandstärke durchführt, in die die Spannung eingeht, denen das Rohrleitungssystem bei auslegungs- und betriebsspezifischen Lastfällen und/oder Lastfallkombinationen unterliegt, bei dem man die Ist-Wandstärke mit der berechneten Mindestwandstärke vergleicht, und bei dem man ausgehend von dem dokumentierten Neuzustand des Rohrleitungssystems oder einer früheren Bestandsaufnahme die Entwicklung der Korrosion und/oder Erosion des Rohrleitungssystems feststellt und durch Extrapolation eine Prognose für die weitere Lebensdauer der Rohrleitungssystemkomponenten gewinnt, dadurch gekennzeichnet, daß man die Lebendauerberechnung mit einer umfassenden Spannungsanalyse nach der Methode der finiten Elemente durchführt, daß man zur Erstellung der Isometrie Streckenkontrollpunkte beidseits von Schweißnähten an den Rohrleitungsabschnitten im Bereich von Rohrhalterungen und -auflagen, Bogen, Stutzen, Abzweigen, T-Stücken, Flanschverbindungen, Armaturen und Kompensatoren festlegt, und daß man an jedem Streckenkontrollpunkt die Ist-Wandstärke an einer Mehrzahl von gleichmäßig über den Umfang verteilten Meßpunkten erfaßt und die Mindestwandstärke an diesen Meßpunkten berechnet.

2. Verfahren nach Anspruch 1, dadurch gekennzeichnet, daß man eine Ultraschallmessung der Ist-Wandstärke durchführt.

3. Verfahren nach anspruch 1 oder 2, dadurch gekennzeichnet, daß man bei der Spannungsberechnung als statische Belastung das Eigengewicht, den Innendruck, die behinderte Wärmedehnung, Auflagerverschiebungen, insbesondere durch Vorspannung hervorgerufene Elementverkürzungen und gerichtete Streckenlasten, insbesondere Windlasten, berücksichtigt.

4. Verfahren nach einem der Ansprüche 1 bis 3, dadurch gekennzeichnet, daß man bei der Spannungsberechnung als dynamische Belastung Erdbeben als Spektrum und insbesondere durch Druckstoßkräfte hervorgerufene zeitabhängige Knotenlasten berücksichtigt.

5. Verfahren nach einem der Ansprüche 1 bis 4, dadurch gekennzeichnet, daß man bei der Spannungsberechnung als nichtlineare statische Lasten ein Abheben am Auflager, die Reibung am Auflager sowie durch Anschlagwirkung hervorgerufene Lasten berücksichtigt.

6. Verfahren nach einem der ansprüche 1 bis 5, dadurch gekennzeichnet, daß man bei der Spannungsberechnung Lastfallkombinationen unter Einbeziehung der Spannungen aus Innendruck, Spitzendruck, bleibender Belastung, gelegentlicher Belastung, Wärmedehnung und Auflagerverschiebung berücksichtigt.

## Claims

1. Method for testing conduit systems, including the steps of monitoring and, if need be, re-establishing the structure of the conduit system, determining the actual wall thickness of the conduit system through a non-destructive testing method, confirming or respectively newly preparing an actual-state isometric representation of the conduit system, performing a service life calculation including the calculation of a minimum wall thickness assuring operational safety into which enters the strain to which the conduit system is subjected under lay out-specific and operation-specific load situation and/or combinations of load situations, comparing the actual wall thickness with the calculated minimum wall thickness and establishing the development of corrosion and/or erosion of the conduit system on the basis of a documented new state of the conduit system or an earlier status investigation, and optaining a prognosis for the further service life of the components of the conduit system by extrapolation, characterized in that the service life calculation is performed by an extensive strain analysis according to the method of finite elements, in that for establishing the isometric representation, section checkpoints on both sides of weld seams at the segments of the conduit system in the vicinity of pipe holders and bearings, elbows, props, branches, T-pieces, flange connection, fittings and expansion bellows are defined, and in that the actual wall thickness is detected at a plurality of measurement points distributed uniformly over the periphery of the pipe at each section checkpoint and the minimum wall thickness is calculated at these measurement points.

2. Method according to claim 1, characterized in that an ultrasound measurement of the actual wall thickness is performed.

3. Method according to claim 1 or 2, characterized in that the dead weight, the internal pressure, the impeded thermal expansion, bearing displacements, element shortenings especially caused by prestress, and oriented section loads, especially wind loads, are taken into account as a static load when calculating the strain.

4. Method according to one of the claims 1 to 3, characterized in that earthquakes as a spectrum and time-dependent nodal loads especially caused by pressure impact forces are taken into account as a dynamic load when calculating the strain.

5. Method according to one of the claims 1 to 4, characterized in that a separation at the bearing, the friction at the bearing, and loads resulting form impact action are taken into account as non-linear static loads when calculating the strain.

6. Method according to one of the claims 1 to 5, characterized in that combinations of load situations including the strains caused by internal pressure, peak pressure, persistent load, occasional load, thermal expansion and bearing displacement are taken into account when calculating the strain.

**Revendications**

1. Procédé d'inspection de systèmes de tuyauteries, dans lequel on vérifie et éventuellement relève à nouveau le montage du système de tuyauterie, on détermine l'épaisseur de paroi effective du système de tuyauterie par l'intermédiaire d'un procédé d'examen exempt de perturbations et on confirme ou respectivement établit à nouveau une isométrie de l'état effectif du système de tuyauterie, on effectue un calcul de la durée de vie, y compris le calcul d'une épaisseur de paroi minimale garantissant la sécurité de fonctionnement, dans lequel intervient la tension à laquelle le système de tuyauterie est soumis dans le cas de charges et/ou de combinaisons de charges spécifiques de la conception et du fonctionnement, on compare l'épaisseur de paroi effective à l'épaisseur de paroi minimale calculée, et, en partant de l'état neuf documenté du système de tuyauterie ou d'un relevé d'état antérieur, on constate le développement de la corrosion et/ou de l'érosion du système de tuyauterie et on produit par extrapolation une prévision de la durée de vie ultérieure des composants du système de tuyauterie, caractérisé en ce qu'on effectue le calcul de durée de vie à l'aide d'une vaste analyse de tension selon la méthode des éléments finis, en ce que, pour l'établissement de l'isométrie, on fixe des points de contrôle de parcours de part et d'autre de cordons de soudure sur les sections de tuyauterie, dans la zone de fixations et de supports de tuyaux, de coudes, de tuyaux de rallonge, de ramifications, de pièces en T, de liaisons bridées, de robinetteries et de compensateurs, et en ce qu'à chaque point de contrôle de parcours on saisit l'épaisseur de paroi effective en une multiplicité de points de mesure répartis uniformément sur la périphérie et on calcule l'épaisseur de paroi minimale à ces points de mesure.

2. Procédé suivant la revendication 1, caractérisé en ce qu'on effectue une mesure par ultrasons de l'épaisseur de paroi effective.

3. Procédé suivant l'une des revendications 1 et 2, caractérisé en ce que, lors du calcul de tension, on considère, comme charge statique, le poids propre, la pression interne, la dilatation thermique entravée, des déplacements de support, en particulier des raccourcissements d'éléments qui sont engendrés par une précontrainte, et des charges linéaires orientées, en particulier des charges dues à l'action du vent.

4. Procédé suivant l'une des revendications 1 à 3, caractérisé en ce que, lors du calcul de tension, on considère, comme charge dynamique, un tremblement de terre sous la forme d'un spectre et en particulier des charges nodales qui sont fonction du temps et sont engendrées par des forces de coups de bélier.

5. Procédé suivant l'une des revendications 1 à 4, caractérisé en ce que, lors du calcul de tension, on considère, comme charges statiques non linéaires, un décollement sur le support, le frottement sur le support ainsi que des charges engendrées par une action de butée.

6. Procédé suivant l'une des revendications 1 à 5, caractérisé en ce que, lors du calcul de tension, on considère des combinaisons de cas de charges en faisant intervenir les tensions provenant d'une pression interne, d'une pression à pointes, d'une charge permanente, d'une charge occasionnelle, d'une dilatation thermique et d'un déplacement de support.